# EUROPEAN PATENT SPECIFICATION

(11) **EP 2 957 350 B1**
(45) Date of publication and mention of the grant of the patent: **01.03.2017**
(21) Application number: 15171974.7
(22) Date of filing: 12.06.2015
(51) Int. Cl.: B05C 5/02, B29C 65/00, B29C 65/52, B29L 31/00, B05C 9/04

(54) **GLUING METHOD AND APPARATUS**
KLEBEVERFAHREN UND VORRICHTUNG
MÉTHODE DE COLLAGE ET APPAREIL

(30) Priority: 17.06.2014 IT MO20140177
(43) Date of publication of application: 23.12.2015
(73) Proprietor: Aper S.r.l., 40053 Bazzano (BO) (IT)
(72) Inventor: FERRI, Stefano, 40132 Bologna (IT); ROMAGNOLI, Massimo, 40063 Zola Predosa (BO) (IT); GAZZETTI, Gabriele, 61047 San Lorenzo in Campo (PS) (IT); GOFFI, Gabrio, 60011 Arcevia (AN) (IT); ROSA, Giuliano, 61047 San Lorenzo in Campo (PS) (IT)
(74) Representative: Villanova, Massimo

(56) References cited:
- EP-A1- 2 520 426
- EP-A2- 2 147 775
- US-A1- 2004 188 031
- US-A1- 2013 327 462

## Description

### Background of the invention

The invention relates to a gluing method and apparatus, in particular for gluing elements made of elastically deformable material.

In specifically, but not exclusively, the invention can be used in the production of mattresses for gluing elements of elongated shape, in particular side members made, for example, of elastic expanded polyurethane.

The prior art comprises patent publication US 2013/0327462, which shows a method for forming stratified materials for mattresses, in which the distribution of adhesive by spray dispensing is provided.

Applying glue, by a spray dispenser, to one side of a foam side member intended for making mattresses is also known.

Applying glue to a side member for mattresses by a spray dispenser nevertheless has limits and drawbacks.

Firstly, there is a great dispersion of minute glue drops in the air, with the consequent need to intervene to reduce environmental pollution, by for example providing protection and aspirating booths.

Secondly, the regular distribution of glue on the surface is not easy, with a great risk of the glue running and dripping, generating dirt and rejected material, obtaining gluing quality that is not high.

Further, the process of manufacturing mattresses generally requires glue to be distributed on several sides (two opposite sides) of each side member, also in several coats, with consequent complication and increase in processing time.

EP 2147775 shows a method according to the preamble of claim 1.

### Background of the invention

One object of the invention is to remedy one or more of the aforesaid limits and drawbacks of the prior art.

One object is to provide a method for distributing glue on an element for manufacturing mattresses.

One object is to make an apparatus for distributing glue on an element for manufacturing mattresses.

One advantage is to reduce the risk of environmental pollution caused by the dispersion of glue drops in the air.

One advantage is to facilitate the regular distribution of glue on the surfaces of the element to be glued.

One advantage is to reduce the risk of running and dripping of the glue.

One advantage is to reduce the formation of dirt and rejected material.

One advantage is to obtain high gluing quality.

One advantage is to save glue.

One advantage is to enable glue to be distributed on several sides (in particular on two opposite sides) of an element to be glued with a single coat.

One advantage is to provide a relatively simple and rapid gluing method, with a subsequent decrease in processing time.

One advantage is to provide a constructionally simple and cheap gluing apparatus.

These objects and advantages, and still others, are achieved by the method and/or by the apparatus according to one or more of the claims set out below.

In one embodiment, a gluing method comprises the steps of: supplying an element in elastically deformable material for mattresses on a conveying line; arranging two nozzles in contact with two respective opposite vertical sides of the moving element, wherein each nozzle has a vertical line of outlet ports that partially sink in the material of the element; making the glue exit through the outlet ports of the nozzle whilst the element advances.

In one embodiment, a gluing apparatus comprises: means for supplying an element made of an elastically deformable material along a supply path; nozzle means arranged to be in contact with the element that advances in said path to dispense glue on at least one lateral side of said element, said nozzle means being arranged so as to penetrate into the material of the element; elastic adjusting means, in particular of pneumatic type, arranged on a support that carries said nozzle means, said support being movable in a penetration direction of the nozzle means in the material of the element that is transverse to an advancement direction of the element along said path, said support comprising side wall means arranged for pressing the elongated element sideways with a force determined by said elastic adjusting means.

### Brief description of the drawings

The invention can be better understood and implemented with reference to the attached drawings that illustrate some embodiments thereof by way of non-limiting example.

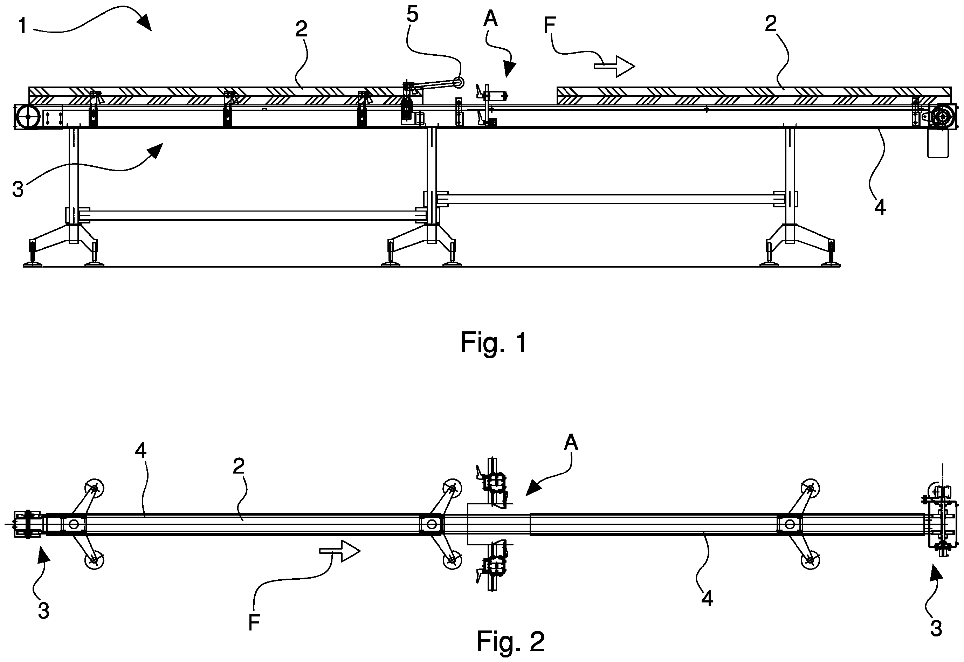

Figure 1 is a schematic view in a vertical elevation, of one embodiment of a side member gluing apparatus according to the present invention.
Figure 2 is a top view of the apparatus of figure 1.

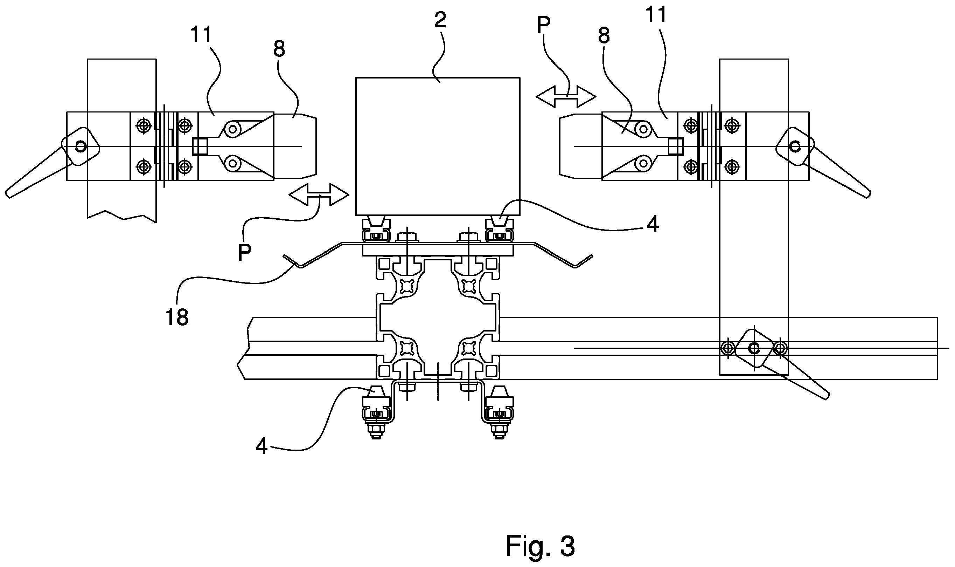

Figure 3 is a frontal view in a vertical elevation of the glue dispensing zone A of the apparatus in figure 1.
Figure 4 shows an enlarged detail of figure 2 in which the glue dispensing zone A is visible.

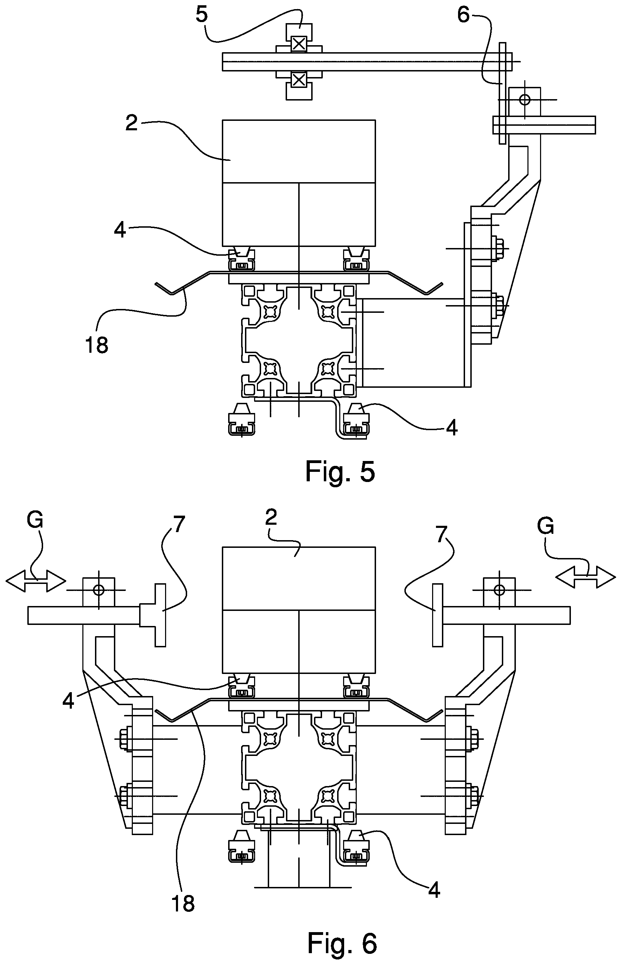

Figure 5 is a frontal view in a vertical elevation of the apparatus in figure 1 in which the upper roller guiding means of the side member is visible.
Figure 6 is a frontal view in a vertical elevation of the apparatus in figure 1 in which the lateral roller guiding means of the side member is visible.
Figure 7 is a top view of a dispensing zone A of another embodiment of an apparatus according to the present invention.

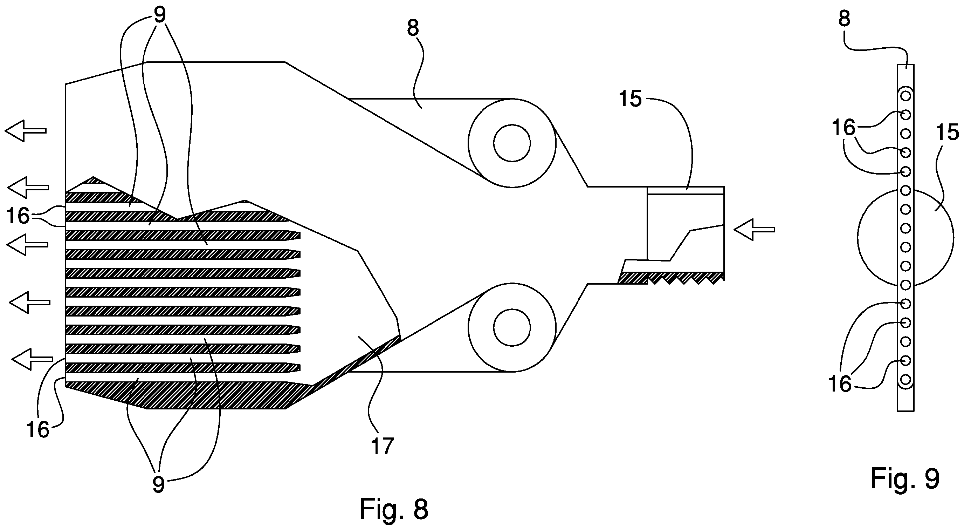

Figure 8 is a partially sectioned view of a glue dispensing nozzle that is usable in the aforesaid gluing apparatuses.
Figure 9 is a left-hand view of figure 8.

### Detailed description

With reference to the attached figures, alike elements of various embodiments have been indicated, where possible, by the same numbers.

With 1 a gluing apparatus has been indicated overall, in particular for distributing glue on an element 2 to be glued, in particular an element for mattresses. The glue applied comprises, in particular, single-component glue.

The element 2 to be glued may comprise, in particular, an element of elongated shape. The element 2 to be glued may comprise, in particular, an element made of an elastically deformable material, for example of elastic or viscoelastic expanded polyurethane. The element 2 to be glued may comprise, in particular, an element intended for forming an edge of a mattress. The element 2 to be glued may comprise, in particular, a parallelpipedon-shaped element. The element 2 to be glued may comprise, in particular, a side member for mattresses.

The gluing apparatus 1 may comprise, in particular, supplying means 3 for supplying the element 2 to be glued along a supply path, in particular according to a (horizontal) advancement direction F parallel to the longitudinal extent of the element 2. Such supplying means 3 may comprise, in particular, conveying means that is slidable in a closed loop on which the element 2 (of elongated shape) rests. Such (driven) conveying means may comprise, for example, at least one flexible conveying member. In the specific case the conveying means comprises two conveyor belts 4 arranged parallel alongside one another.

The supplying means 3 may comprise, in particular, upper roller means 5 arranged above the elongated element 2 arranged for pressing the element 2 against the conveying means. Such upper roller means 5 may comprise, in particular, two or more rollers, each with a rotation axis that is horizontal and perpendicular to the (horizontal) advancement direction F of the element 2 to be glued. Such upper roller means 5 may be adjustable vertically, for example being carried by an arm 6 that is rotatable with a horizontal rotation axis. The upper roller means 5 may comprise, in particular, a set of two or more coaxial rollers, carried, for example, by the same arm 6. The upper roller means 5 may comprise, in particular, two or more rollers, or two or more sets of rollers that are alongside one another, arranged one after the other in the advancement direction F of the element 2.

The supplying means 3 may comprise, in particular, lateral guiding means 7 arranged on at least one side of the supply path of the elongated element 2 to guide the element in the advancement thereof. The lateral guiding means 7 may be arranged, as in the specific case, on both sides of the supply path of the element 2. The lateral guiding means 7 may comprise, in particular, containing means (of the wall type extending vertically) the position of which in a movement direction G horizontal and transverse to the (horizontal) advancement direction F of the element 2 is adjustable, so as to adapt to elements 2 (side members for mattresses) of different width.

The gluing apparatus 1 may comprise, in particular, nozzle means arranged to be in contact with the element 2 to be glued that advances along the supply path. The nozzle means may be arranged, in particular, to dispense glue on at least one lateral side of the element 2 to be glued. The nozzle means may be arranged, as in this specific example, so as to be in contact with two lateral sides, which are opposite one another, of the element 2 to be glued.

Each lateral side of the element 2 to be glued may comprise a vertical side, where "vertical side" is defined here as a portion of the element 2 having at least one extent in a vertical direction; this extent in a vertical direction may be, in particular, greater than the extent of the aforesaid element portion in a horizontal direction; this definition may thus comprise, for example, also an oblique (curved or flat) side, in particular an oblique side that is tilted more vertically than horizontally. In the specific case disclosed here, in which the element 2 to be glued is parallelpipedon shaped (side member for mattresses), the two lateral sides of the element 2 comprise two flat sides with a vertical extent.

The nozzle means may comprise at least one dispenser 8 arranged on one side of the supply path to distribute the glue on a lateral side of the element 2 for mattresses. As in the specific case, the nozzle means may comprise at least two dispensers 8 arranged on opposite sides of the supply path to distribute the glue on the opposite lateral sides of the element 2 for mattresses.

Each dispenser 8 may comprise, in particular, at least one outlet conduit 9. Each dispenser 8 may comprise, more in particular, at least two or more outlet conduits 9 arranged in parallel. Each dispenser 8 may comprise, more in particular, at least four, or at least eight, or at least twelve, or at least sixteen, outlet conduits 9 arranged in parallel. The outlet conduits 9 may be arranged alongside one another to form an ordered array, as in this embodiment.

Each outlet conduit 9 may terminate, in particular, with an outlet port 16 arranged so as to penetrate into the material of the element to be glued. The various outlet ports 16 or each single dispenser 8 may be arranged in a line, for example at a (constant) distance of a few millimetres from one another (in particular the distance between the axes of two adjacent outlet ports 16 may be greater than 1 millimetre, or 2 millimetres and/or may be less than 3 millimetres, or 4 millimetres, or 5 millimetres).

Each dispenser 8 may comprise, for example, a model 600.130.AC air nozzle by Lechler ®.

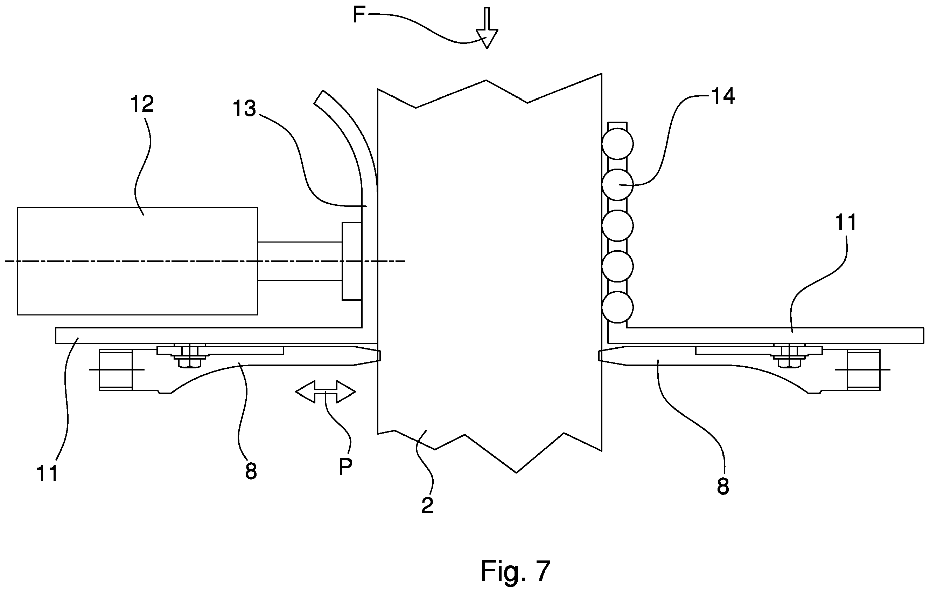

The gluing apparatus 1 may comprise, in particular, adjusting means arranged for (automatically) varying the degree of penetration or sinking of the outlet ports 16 inside the material of the element 2 to be glued. This adjusting means may comprise, for example, elastic means, in particular (embodiment of figure 7) the elastic means of pneumatic type, which is in particular adjustable by a pressure reducer.

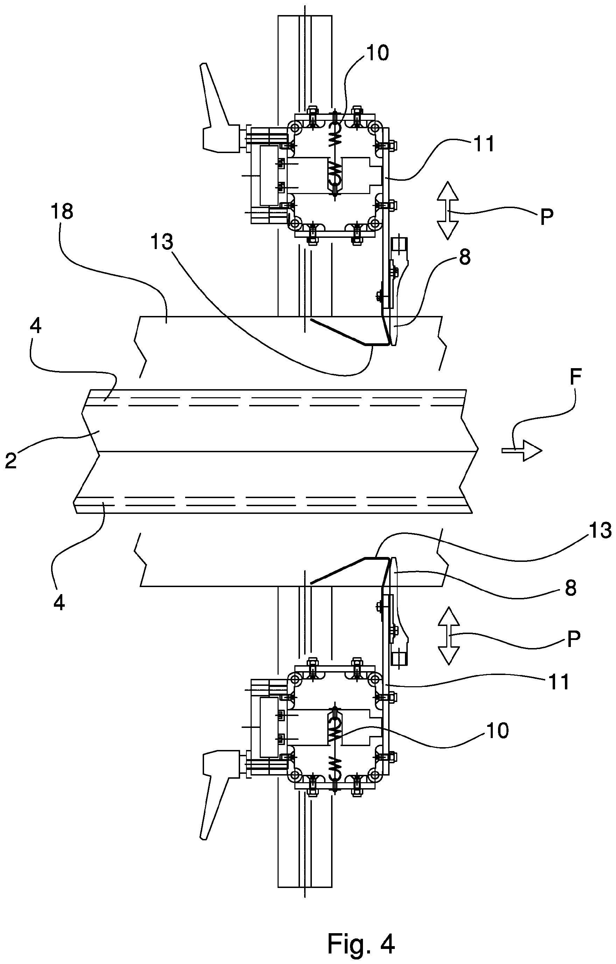

In the specific case illustrated in figure 4, the elastic means may comprise mechanical spring means 10 arranged between a fixed frame of the apparatus and a movable support 11 that carries the dispenser 8.

In the specific case illustrated in figure 7, the elastic means may comprise at least one pneumatic linear actuator 12 associated with at least one of the two dispensers 8.

The elastic means may be applied, as in these specific embodiments, to the support 11 that carries one of the two dispensers 8. This support 11 may be movable in a penetration or sinking direction P of the nozzle means in the material of the element 2 to be glued. This (horizontal) penetration direction P may be transverse (for example perpendicular) to the (horizontal) advancement direction F of the element 2 to be glued along the supply path. This support 11 mobile may comprise, in particular, side wall means 13 arranged on one side of the supply path. This side wall means 13 is arranged in such a manner as to press with a preset force (that is adjustable by adjusting the pressure reducer in the embodiment of figure 7) on one side of the element 2 to be glued.

The side wall means 13 may be arranged, in particular, at least partially opposite lateral abutting means 14 (for example roller abutting means as in the embodiment of figure 7).

As in the illustrated embodiments, the side wall means 13, being carried by elastic means (for example of pneumatic type, like the actuator 10), is movable in a direction transverse to the advancement direction F of the elongated element 2 to be glued. The latter, passing between the side wall means 13 and the lateral abutting means 14 (the one to the right and the other to the left) is slightly pressed laterally (with an adjustable force, for example by adjusting the pressure reducer according to the embodiment of figure 7). The element 2 to be glued is thus centred in position with respect to the nozzle means (in this case with respect to the two opposite dispensers 8 between which the element 2 to be glued transits).

The nozzle means (at least one or both dispensers 8) may be carried by the support 11 in a removable manner, for example by a magnetic fitting (that is manually detachable). The user can adjust (for example manually) the position of each dispenser 8 with respect to the corresponding support 11 owing to the possibility of easy movement provided by the removable (magnetic) fitting. It is thus possible to adjust the position of the nozzle means with respect to the element 2 to be glued by at least one double adjustment: by setting the corresponding position of the nozzle means on the nozzle means support 11 and setting (by intervening on the pressure reducer) the force with which the support 11 presses laterally on the elastically deformable element 2.

The position of the nozzle means may also be adjustable in a substantially vertical direction. Further, the height of the nozzle means, i.e. the length of the (linear) glue dispensing zone is adjustable, for example by the selective arrangement of dispensers 8 having a (linear) glue dispensing zone of different lengths, or by the arrangement of two or more dispensers 8 (aligned) on one another. This enables the apparatus 1 to be easily adapted to glue elements 2 of different heights.

The nozzle means may be connected, in particular by conduit means (that is not shown), to at least one tank of the glue (which is not shown). This tank may comprise, in particular, a pressurised tank. It is possible to set up (on the conduit means) valve means (for example an on-off valve) for opening and closing the connection between the tank and the nozzle means. In particular, each dispenser 8 may be provided with a fitting 15 for removable connection to a (flexible) conduit which is in turn connectable (by the valve means) to the tank of the glue.

One or more outlet conduits 9 may each end with an outlet port 16 that has a maximum width that is less than 3 millimetres or a maximum width that is less than 2 millimetres. One or more outlet conduits 9 may each end with an outlet port 16 that has a minimum width that is greater than 0.25 millimetres or a minimum width that is greater than 0.5 millimetres. One or more outlet conduits 9 may each have a length that is greater than 10 millimetres or greater than 20 millimetres. One or more outlet conduits 9 may each have a maximum width that is less than 3 millimetres or a maximum width that is less than 2 millimetres. One or more outlet conduits 9 may each have a minimum width that is greater than 0.25 millimetres or a minimum width that is greater than 0.5 millimetres. In particular, each outlet conduit 9 terminates with an outlet port 16 (for example almost circular) having a diameter comprised between 0.5 and 2 millimetres. In particular, each outlet conduit 9 (with a straight cross section that is almost circular) has a diameter comprised between 0.5 and 2 millimetres. Each dispenser may comprise internally a manifold zone 17 arranged upstream of the various conduits 9 (between the fitting 15 and the conduits 9). The manifold zone 17, inside a body of the dispenser, is common to all the conduits 9 and is in flowing communication therewith.

As in the specific case shown in figure 7, the lateral abutting means 14 may comprise roller means arranged on at least one side of the supply path of the elongated element 2 to guide laterally the advancement of the element 2. The roller means may be arranged, in particular, immediately before the dispensing zone A wherein the glue is distributed on the elements 2 in transit. Such roller means may comprise, in particular, a row of rollers (in particular a row extending in the advancement direction F) each with a rotation axis that is (vertical and) perpendicular to the (horizontal) advancement direction F of the element 2 to be glued.

As has been seen, the position of the nozzle means with respect to the element 2 in transit may be adjustable both with respect to the height of the element 2 (in a substantially vertical positioning direction) both with reference to the width of the element 2 (in a positioning direction that is substantially horizontal and perpendicular to the length of the element 2 and to the advancement direction F thereof of the supply path).

The gluing apparatus 1 may comprise, in particular, sensor means for detecting (the transit and/or the presence of the) elongated element 2 in the path upstream of the nozzle means. Such sensor means may comprise, for example, sensor means of optical type (for example a photocell) arranged just before the gluing zone or dispensing zone A where the nozzle means operates.

The gluing apparatus 1 may comprise, in particular, electronic control means that is programmable for activating and/or activating the dispensing of the nozzle means in response to a signal supplied by the sensor means. In particular the control means may be provided with a timer and may be programmed for opening and closing the aforesaid valve means (controlling dispensing of the glue) after a preset time (depending on the advancement speed of the element 2 for mattresses that is conveyed along the supply path) that has elapsed, respectively, since the start and since the end of the transit of the element 2 for mattresses in front of the sensor means.

The gluing apparatus 1 may comprise, in particular, a tray (of known type), which is not illustrated, arranged near each dispenser 8, to enable the operator to immerse (into a liquid, for example water) the dispenser 8 (which is removable in a simple manner thanks to the magnetic fitting) when dispensing is for any reason interrupted for a long time, to prevent the drying glue blocking the nozzle means during the periods of pause or inactivity.

The gluing apparatus 1 may comprise, in particular, gutter means 18 for collecting possible excess glue. Such gutter means 18 may extend in length along the supply path of the element 2 to be glued.

In use, a corresponding supply motion is provided between the element 2 to be glued and the nozzle means (dispensers 8) during which the nozzle means is in contact with at least one lateral side of the element 2 to be glued.

During contact between the nozzle means and the element to be glued glue is dispensed on the lateral side of the element 2 making the glue exit through the outlet conduits 9. In the specific case the nozzle means operates simultaneously on two opposite lateral sides of the element 2 to be glued.

During dispensing of the glue, the end outlet port 16 of each outlet conduit 9 is arranged so as to sink at least partially into the elastically deformable material of the element 2 to be glued. Each outlet port 16 may penetrate into the material adjustably to vary the flowrate of glue dispensed to the element 2. The flowrate of the glue will decrease with the increase in the degree of penetration in the material of the element 2.

The correct positioning of the element 2 to be glued with respect to the nozzle means (dispensers 8 to the right and left of the element 2) in the penetration direction in the material of the element 2 is performed automatically owing to the adjusting means. In particular, the side wall means 13 (integral with the support 11 that has at least one part of the nozzle means) presses the element 2 against the lateral abutting means 14 (in particular of the roller type) ensuring the centred position of the element 2 to be glued. If the force of the side wall means 13 against the element 2 is excessive (risk of arrest of the advancement of the element 2) or too feeble (risk of error in positioning element 2 with respect to the nozzle means), it is possible to intervene by modifying the calibration of the elastic means that generates the aforesaid force (in particular the calibration of the pressure reducer that controls the elastic means of pneumatic type as in the embodiment of figure 7).

Glue dispensing is activated (by opening the valve means arranged in the connection between the glue tank and the nozzle means) by a signal from the sensor means detecting the transit of the element 2 in front of the sensor means. Glue dispensing is interrupted (by closing the valve means) by a signal from the sensor means when it no long detects the element 2. The exact moments of entry and exit of the element 2 from the dispensing zone A (for starting and concluding dispensing with precision) are determined (by timer) taking account of both the distance between the zone for detecting the element 2 in transit and the zone of actual dispensing onto the element 2, and of the speed of the element 2 in transit conveyed by the belts 4.

It has been seen that gluing is particularly effective, in particular owing to the fact that the nozzle means sinks at least partially into the material of the element 2. Glue dripping is reduced, in particular by virtue of the fact that at least one part of the glue penetrates more easily into the material, rather than remaining on the surface.

Further, a glue saving is obtained, in particular owing to the fact that the nozzle means, by pressing directly against the surface to be glued, contributes to reducing the dispersal of glue outside the element 2 to be glued.

The gluing apparatus can be easily adaptable for gluing longitudinal elements of different formats, in particular of different heights and/or widths.

## Claims

1. Gluing method comprising the steps of:
- providing a mattress element (2) made of a deformable material;
- providing nozzle means (8);
- providing a relative supply motion between said mattress element (2) and said nozzle means (8);
- distributing glue on at least one lateral side of said element (2) by making the glue exit through said nozzle means (8);
**characterized in that**:
- during said supply motion, said nozzle means (8) is in contact with said at least one lateral side;
- said nozzle means (8) operates simultaneously on two opposite lateral sides of said element (2).

2. Method according to claim 1, wherein said deformable material comprises elastic or viscoelastic polyurethane foam.

3. Method according to claim 1 or 2, wherein said nozzle means (8) has two or more outlet conduits (9) arranged fluidly parallel to one another.

4. Method according to claim 3, wherein during said supply motion each of said conduits (9) ends with an outlet port (16) that is at least partly embedded in the deformable material of said element (2) so as to deform the material.

5. Method according to claim 4, wherein said outlet port (16) is embedded in the material of said element (2) in an adjustable manner to vary the flowrate of glue distributed on said element (2).

6. Method according to any preceding claim, wherein said element (2) comprises an elongated parallelepiped-shaped element.

7. Method according to any preceding claim, wherein, during said supply motion, said nozzle means (8) is at least partly embedded in the deformable material of said element (2) so as to deform the material.

8. Gluing apparatus, in particular for implementing a method according to any preceding claim, said apparatus comprising:
- supplying means (3) for supplying a mattress element (2) made of a deformable material along a supply path;
- nozzle means (8) arranged so as to be in contact with the element (2) that advances in said path to distribute glue on at least one lateral side of said element (2);
**characterized in that** said nozzle means (8) is arranged so as to be in contact with two lateral sides that are opposite one another, of said element (2).

9. Apparatus according to claim 8, wherein said nozzle means (8) comprises two or more outlet conduits (9) that are fluidly parallel to one another.

10. Apparatus according to claim 9, each of said conduits (9) terminating with an outlet port (16) arranged so as to penetrate the material of the element (2), said apparatus comprising adjusting means arranged for varying the penetration of the outlet ports (16) in the material of the element (2).

11. Apparatus according to claim 9, said adjusting means comprising elastic means (12) of pneumatic type that is adjustable by a pressure reducing valve, said elastic means (12) being applied to a support (11) that carries said nozzle means (8), said support (11) being movable in a penetration direction (P) of said nozzle means (8) in the material of the element (2), said penetration direction (P) being transverse to an advancement direction (F) of the element (2) along said path; said support (11) comprising lateral wall means (13) arranged for pressing laterally the element (2) against lateral abutting means (14) with a force determined by said elastic means (12); said nozzle means (8) being carried by said support (11) in a removable manner.

12. Apparatus according to any one of claims 9 to 11, wherein:
- each of said conduits (9) terminates with an outlet port (16) that has a maximum width that is less than 3 millimetres and/or a minimum width that is greater than 0.25 millimetres; said outlet port (16) having, in particular, a maximum width that is less than 2 millimetres and/or a minimum width that is greater than 0.5 millimetres; and/or
- each of said conduits (9) has a length greater than 10 millimetres or greater than 20 millimetres and/or wherein each of said conduits (9) has a maximum width that is less than 3 millimetres and/or a minimum width that is greater than 0.25 millimetres; each of said conduits (9) having, in particular, a maximum width that is less than 2 millimetres and/or a minimum width that is greater than 0.5 millimetres.

13. Apparatus according to any one of claims 8 to 12, comprising: sensor means for detecting the element (2) in transit along said path upstream of said nozzle means (8); and control means for activating and/or deactivating the dispensing of said nozzle means (8) in response to a signal supplied by said sensor means.

14. Apparatus according to any one of claims 8 to 13, wherein said supplying means (3) comprises: conveying means (4) that is slidable in a closed loop above which the element (2) rests; and roller means (5) arranged above the element (2) to push the element against said conveying means (4).

15. **Apparatus according to any one of claims 8 to 14, wherein** said nozzle means (8) is arranged to sink at least partially in the deformable material of said element (2) so as to deform the material.

## Patentansprüche

1. Klebeverfahren, das folgende Schritte aufweist:
- Bereitstellen eines Matratzenelements (2), das aus einem verformbaren Material gefertigt ist;
- Bereitstellen von Düsenmitteln (8);
- Bereitstellen einer relativen Zufuhrbewegung zwischen dem Matratzenelement (2) und den Düsenmitteln (8);
- Verteilen von Kleber auf zumindest einer lateralen Seite des Elements (2), indem der Kleber durch die Düsenmittel (8) austritt;
**dadurch gekennzeichnet, dass**:
- während der Zufuhrbewegung das Düsenmittel (8) in Kontakt steht mit der zumindest einen lateralen Seite;
- das Düsenmittel (8) simultan an zwei gegenüberliegenden Seiten des Elements (2) tätig ist.

2. Verfahren gemäß Anspruch 1, wobei das verformbare Material elastischen oder viskoelastischen Polyurethanschaum aufweist.

3. Verfahren gemäß Anspruch 1 oder 2, wobei das Düsenmittel (8) zwei oder mehrere Auslasskanäle (9) aufweist, die parallel zueinander fließend angeordnet sind.

4. Verfahren gemäß Anspruch 3, wobei während der Zufuhrbewegung jeder der Kanäle (9) mit einer Auslassöffnung (16) endet, die zumindest teilweise in das verformbare Material des Elements (2) eingebettet ist, so dass das Material verformt wird.

5. Verfahren gemäß Anspruch 4, wobei die Auslassöffnung (16) in das Material des Elements (2) auf einstellbare Art und Weise eingebettet ist, um die Flussrate des Klebers, der auf dem Element (2) verteilt wird, einzustellen.

6. Verfahren gemäß einem der vorherigen Ansprüche, wobei das Element (2) ein längliches parallelflächig geformtes Element aufweist.

7. Verfahren gemäß einem der vorherigen Ansprüche, wobei während der Zufuhrbewegung das Düsenmittel (8) zumindest teilweise in das verformbare Material des Elements (2) eingebettet ist, um das Material zu verformen.

8. Klebeapparatur, insbesondere zum Implementieren eines Verfahrens gemäß einem der vorherigen Ansprüche, wobei die Apparatur Folgendes aufweist:
- Zufuhrmittel (3), um ein Matratzenelement (2), das aus einem verformbaren Material gefertigt ist, entlang eines Zufuhrwegs zuzuführen;
- Düsenmittel (8), die derart angeordnet sind, um in Kontakt mit dem Element (2) zu treten, welches in dem Weg fortschreitet, um Kleber auf zumindest einer Seite des Elements (2) zu verteilen;
**dadurch gekennzeichnet, dass** das Düsenmittel (8) derart angeordnet ist, um mit zwei lateralen Seiten des Elements (2) in Kontakt zu treten, die einander gegenüberliegen.

9. Apparatur gemäß Anspruch 8, wobei das Düsenmitteln (8) zwei oder mehrere Auslasskanäle (9) aufweist, die parallel zueinander fließend angeordnet sind.

10. Apparatur gemäß Anspruch 9, wobei jeder der Kanäle (9) mit einer Auslassöffnung (16) endet, die derart angeordnet ist, um in das Material des Elements (2) einzudringen, wobei die Apparatur Einstellmittel aufweist, die angeordnet sind, um das Eindringen der Auslassöffnungen (16) in das Material des Elements (2) zu variieren.

11. Apparatur gemäß Anspruch 9, die Einstellmittel elastische Mittel (12) vom pneumatischen Typ aufweisen, die durch ein druckreduzierendes Ventil einstellbar sind, wobei die elastischen Mittel (12) auf einen Träger (11) angewendet werden, der die Düsenmittel (8) trägt, wobei der Träger (11) in eine Eindringrichtung (P) der Düsenmittel (8) in das Material des Elements (2) beweglich ist, wobei die Eindringrichtung (P) quer verläuft zu einer Fortschreitrichtung (F) des Elements (2) entlang des Wegs; wobei der Träger (11) laterale Wandmittel (13) aufweist, die angeordnet sind, um das Element (2) lateral gegen laterale Anschlagmittel (14) mit einer Kraft zu drücken, die durch die elastischen Mittel (12) bestimmt ist; wobei die Düsenmittel (8) von dem Träger (11) auf entfernbare Art und Weise getragen werden.

12. Apparatur gemäß einem der Ansprüche 9 bis 11, wobei:
- jeder der Kanäle (9) mit einer Auslassöffnung (16) endet, die eine maximale Weite, die kleiner ist als 3 mm und/oder eine minimale Weite, die größer ist als 0,25 mm, aufweist, wobei die Auslassöffnung (16) insbesondere eine maximale Weite, die kleiner ist als 2 mm und/oder eine minimale Weite aufweist, die größer ist als 0,5 mm; und/oder
- jeder der Kanäle (9) eine Länge aufweist, die größer ist als 10 mm oder größer ist als 20 mm, und/oder wobei jeder der Kanäle (9) eine maximale Weite, die kleiner ist als 3 mm und/oder eine minimale Weite aufweist, die größer ist als 0,25 mm; wobei jeder der Kanäle (9) insbesondere eine maximale Weite, die kleiner ist als 2 mm und/oder eine minimale Weite aufweist, die größer ist als 0,5 mm.

13. Apparatur gemäß einem der Ansprüche 8 bis 12, die Folgendes aufweist:
Sensormittel zum Detektieren des Elements (2) auf dem Weg entlang des Wegs stromaufwärts der Düsenmittel (8); und Steuermittel zum Aktivieren und/oder Deaktivieren der Abgabe der Düsenmittel (8) in Antwort auf ein Signal, das von den Sensormitteln zugeführt wird.

14. Apparatur gemäß einem der Ansprüche 8 bis 13, wobei die Zufuhrmittel (3) Folgendes aufweisen: Fördermittel (4), die in einem geschlossenen Kreis verschiebbar sind, oberhalb dessen das Element (2) gelagert ist; und Rollmittel (5), die oberhalb des Elements (2) angeordnet sind, um das Element gegen die Fördermittel (4) zu drücken.

15. Apparatur gemäß einem der Ansprüche 8 bis 14, wobei das Düsenmittel (8) angeordnet ist, um zumindest teilweise in das verformbare Material des Elements (2) einzusinken, so dass das Material verformt wird.

## Revendications

1. Procédé de collage comprenant les étapes consistant à :
- fournir un élément de matelas (2) réalisé en un matériau déformable ;
- fournir des buses (8) ;
- fournir un mouvement de distribution relatif entre ledit élément de matelas (2) et lesdites buses (8) ;
- déposer de la colle sur au moins un côté latéral dudit élément (2) en faisant sortir la colle à travers lesdites buses (8) ;
**caractérisé en ce que** :
- pendant ledit mouvement de distribution, lesdites buses (8) sont en contact avec ledit au moins un côté latéral ;
- lesdites buses (8) fonctionnent simultanément sur deux côtés latéraux opposés dudit élément (2).

2. Procédé selon la revendication 1, dans lequel ledit matériau déformable comprend une mousse de polyuréthane élastique ou viscoélastique.

3. Procédé selon la revendication 1 ou 2, dans lequel lesdites buses (8) possèdent au moins deux conduits de sortie (9) de fluide agencés parallèles entre eux.

4. Procédé selon la revendication 3, dans lequel pendant ledit mouvement de distribution chacun desdits conduits (9) se termine par un orifice de sortie (16) qui est au moins partiellement enfoncé dans le matériau déformable dudit élément (2) de manière à déformer le matériau.

5. Procédé selon la revendication 4, dans lequel ledit orifice de sortie (16) est enfoncé dans le matériau dudit élément (2) de manière réglable pour faire varier le débit de la colle distribuée sur ledit élément (2).

6. Procédé selon l'une quelconque des revendications précédentes, dans lequel ledit élément (2) comprend un élément allongé en forme de parallélépipède.

7. **Procédé selon l'une quelconque des revendications précédentes, dans lequel,** pendant ledit mouvement de distribution, lesdites buses (8) sont au moins partiellement enfoncées dans le matériau déformable dudit élément (2) de manière à déformer le matériau.

8. Appareil d'encollage, notamment pour la mise en oeuvre d'un procédé selon l'une quelconque des revendications précédentes, ledit appareil comprenant :
- des moyens de distribution (3) destinés à amener un élément de matelas (2) réalisé en un matériau déformable le long d'un circuit de distribution ;
- des buses (8) agencées de manière à être en contact avec l'élément (2) qui avance dans ledit circuit pour distribuer de la colle sur au moins un côté latéral dudit élément (2) ;
**caractérisé en ce que** lesdites buses (8) sont agencées de manière à être en contact avec deux côtés latéraux qui sont à l'opposé l'un de l'autre, dudit élément (2).

9. Appareil selon la revendication 8, dans lequel lesdites buses (8) comprennent au moins deux conduits de sortie (9) du fluide qui sont parallèles entre eux.

10. Appareil selon la revendication 9, chacun desdits conduits (9) se terminant par un orifice de sortie (16) agencé de manière à pénétrer le matériau de l'élément (2), ledit appareil comprenant des moyens de réglage agencés pour faire varier la pénétration des orifices de sortie (16) dans le matériau de l'élément (2).

11. Appareil selon la revendication 9, lesdits moyens de réglage comprenant des moyens élastiques (12) de type pneumatique qui sont réglables par une valve de réduction de pression, lesdits moyens élastiques (12) étant appliqués à un support (11) qui porte lesdites buses (8), ledit support (11) étant mobile dans une direction de pénétration (P) desdites buses (8) dans le matériau de l'élément (2), ladite direction de pénétration (P) étant transversale à une direction d'avancement (F) de l'élément (2) sur ledit circuit ; ledit support (11) comprenant des moyens de paroi latéraux (13) agencés pour appuyer latéralement l'élément (2) contre des moyens de butée latéraux (14) avec une force déterminée par lesdits moyens élastiques (12) ; lesdites buses (8) étant portées par ledit support (11) de manière amovible.

12. Appareil selon l'une quelconque des revendications 9 à 11, dans lequel :
- chacun desdits conduits (9) se termine par un orifice de sortie (16) ayant une largeur maximale qui est inférieure à 3 millimètres et/ou une largeur minimale qui est supérieure à 0,25 millimètres ; ledit orifice de sortie (16) ayant, notamment, une largeur maximale qui est inférieure à 2 millimètres et/ou une largeur minimale qui est supérieure à 0,5 millimètres ; et/ou
- chacun desdits conduits (9) a une longueur supérieure à 10 millimètres ou supérieure à 20 millimètres et/ou dans lequel chacun desdits conduits (9) a une largeur maximale qui est inférieure à 3 millimètres et/ou une largeur minimale qui est supérieure à 0,25 millimètres ; chacun desdits conduits (9) ayant, notamment, une largeur maximale qui est inférieure à 2 millimètres et/ou une largeur minimale qui est supérieure à 0,5 millimètres.

13. Appareil selon l'une quelconque des revendications 8 à 12, comprenant :
des moyens de capteur pour détecter l'élément (2) en transit sur ledit circuit en amont desdites buses (8) ; et des moyens de commande pour activer et/ou désactiver la distribution desdites buses (8) en réponse à un signal fourni par lesdits moyens de capteur.

14. Appareil selon l'une quelconque des revendications 8 à 13, dans lequel lesdits moyens de distribution (3) comprennent : des moyens d'acheminement (4) aptes à coulisser en boucle fermée au-dessus desquels repose l'élément (2) ; et des rouleaux (5) agencés au-dessus de l'élément (2) pour pousser l'élément contre lesdits moyens d'acheminement (4).

15. **Appareil selon l'une quelconque des revendications 8 à 14, dans lequel** lesdites buses (8) sont agencées pour s'enfoncer au moins partiellement dans le matériau déformable dudit élément (2) de manière à déformer le matériau.
